# FASCICULE DE BREVET EUROPEEN

(11) **EP 3 833 999 B1**
(45) Date de publication et mention de la délivrance du brevet: **26.04.2023**
(21) Numéro de dépôt: 19737790.6
(22) Date de dépôt: 16.07.2019
(51) Int. Cl.: G01S 7/481, G01S 17/02, G01J 3/02, G01S 17/58, G01S 7/499

(54) **SYSTÈME DE CARACTÉRISATION OPTIQUE D'UNE ZONE D'INTÉRÊT D'UN OBJET**
SYSTEM ZUR OPTISCHEN CHARAKTERISIERUNG EINER INTERESSIERENDEN ZONE EINES OBJEKTES
SYSTEM FOR OPTICAL CHARACTERIZATION OF A ZONE OF INTEREST OF AN OBJECT

(30) Priorité: 06.08.2018 FR 1857319
(43) Date de publication de la demande: 16.06.2021
(73) Titulaire: Centre national de la recherche scientifique, 75016 Paris (FR); Université Côte d'Azur, 06100 Nice (FR)
(72) Inventeur: RESIDORI, Stefania, 06560 Valbonne Sophia-Antipolis (FR); BORTOLOZZO, Umberto, 06560 Valbonne Sophia-Antipolis (FR); OCCHIPINTI, Tommaso, 36100 Vicenza (IT)
(74) Mandataire: Atout PI Laplace
(86) Numéro de dépôt international: PCT/EP2019/069114
(87) Numéro de publication internationale: WO 2020/030389

(56) Documents cités:
- WO-A1-2013/053952
- WO-A1-2015/164868
- US-A1- 2016 344 951

## Description

### DOMAINE DE L'INVENTION

L'invention concerne le domaine de la caractérisation optique d'un objet, telle que la spectroscopie, la polarimétrie, le contrôle non destructif, la mesure sans contact, la reconnaissance de cibles, la télémétrie... Plus particulièrement l'invention concerne la caractérisation optique d'une région d'intérêt sélectionnée d'un objet. L'invention trouve des applications dans des domaines très variés tels que la biologie, l'imagerie biomédicale et le diagnostic médical, les mesures thermiques, la détection de polluants atmosphériques, la surveillance, l'agriculture, le contrôle qualité, l'astronomie, l'analyse de surface, l'automobile...

### ETAT DE LA TECHNIQUE

Une nouvelle génération de capteurs est basée sur l'association d'une caméra, constituée d'une optique d'imagerie et d'un détecteur matriciel, avec un modulateur spatial de lumière (SLM) pour la réalisation d'un capteur à fibre optique basé sur l'holographie adaptative comme décrit dans le brevet FR1500033 intitulé «Capteur à fibre optique».

Cette association caméra/CMOS ou LCOS a été proposée pour la vibrométrie comme décrit dans U. Bortolozzo, D. Dolfi, J-P. Huignard, S. Molin, A. Peigné and S. Residori, «Self-adaptive vibrometry with CMOS-LCOS digital holography», Opt Lett. 40, 1302 (2015).

L'article et le brevet précités sont basés sur l'holographie digitale et utilisent l'association d'une caméra avec un modulateur spatial de lumière pour enregistrer un interférogramme et ensuite modifier localement la fonction de phase.

Bien que basés sur les mêmes éléments que l'invention, décrite plus loin, ils ne concernent pas la sélection d'une zone d'intérêt de l'image d'un objet pour sa caractérisation optique.

Les technologies actuelles ne permettent pas la caractérisation optique complète de la région d'intérêt d'un objet avec un seul module de détection. Pour obtenir ce type de caractérisation il faut utiliser plusieurs instruments d'imagerie, chaque instrument ayant un cout très élevé et étant spécialisé pour effectuer l'analyse demandée sur la totalité de l'image.

De plus, dans ces configurations le flux de données devient trop important, très lourd et difficile à gérer pour l'élaboration. Par exemple l'imagerie hyperspectrale et l'imagerie de polarisation demandent chacune une quantité de mémoire très élevée, leur association comporte donc une difficulté objective pour l'élaboration de données, avec des limitations importantes sur les temps de réponse de ces systèmes d'imagerie et donc une capacité fortement réduite à s'adapter aux changements dynamiques de la scène.

Le document WO2015/164868 décrit un système d'imagerie tridimensionnelle à base d'impulsions d'illumination.

Le document US2016/0344951 décrit un système d'imagerie bi-spectrale visible/ infrarouge avec un cube séparateur.

Le document WO2013/053952 décrit un scanner laser pour acquérir des infirmations 3D d'une scène.

Un but de la présente invention est de palier aux inconvénients précités en proposant un système de caractérisation optique d'une zone d'intérêt sélectionnée d'un objet présentant une architecture modulaire compacte utilisant au moins un dispositif de caractérisation simplifié, typiquement monodimensionnel ou ponctuel.

### DESCRIPTION DE L'INVENTION

La présente invention a pour objet un système de caractérisation optique d'une zone d'intérêt d'un objet d'une scène comprenant :
- un module de sélection comprenant :
   - un détecteur matriciel et une optique d'imagerie réalisant une image de la scène sur le détecteur matriciel via un faisceau initial,
   - une matrice de micro-miroirs et une première lame séparatrice disposée sur un trajet optique du faisceau initial, la matrice de micro-miroirs et la lame séparatrice étant disposées de sorte que l'optique d'imagerie image simultanément la scène sur la matrice de micro-miroirs et sur le détecteur matriciel,
   - une unité de traitement et de contrôle configurée pour traiter l'image de la scène générée par le détecteur matriciel, pour sélectionner la zone d'intérêt de l'objet dans ladite image de la scène générée par le détecteur matriciel, et pour activer sélectivement les micro-miroirs de la matrice compris dans la zone d'intérêt,
- un module d'analyse comprenant :
   - un dispositif optique de collection couplé à la matrice de micro-miroirs et configuré pour collecter un faisceau d'intérêt réfléchit par les micro-miroirs activés,
   - au moins un dispositif de caractérisation configuré pour récupérer le faisceau d'intérêt et pour caractériser ladite zone d'intérêt à partir du faisceau d'intérêt.

Préférentiellement l'au moins un dispositif de caractérisation comprend un capteur monodimensionnel.

Selon une variante, le module d'analyse comprend une pluralité de dispositifs de caractérisation, chaque dispositif de caractérisation recevant une fraction du faisceau d'intérêt.

Selon un mode de réalisation, le système de caractérisation optique selon l'invention comprend en outre un afficheur configuré pour afficher l'image de la scène générée par le détecteur matriciel et la zone d'intérêt sélectionnée. Selon un mode de réalisation au moins un dispositif de caractérisation est choisi parmi un photo-détecteur, un spectromètre, un polarimètre.

Selon une variante, le système de caractérisation optique selon l'invention est de type LIDAR et comprend en outre un module d'illumination comprenant une source laser émettant un faisceau laser et une optique d'illumination configurée pour illuminer l'objet avec le faisceau laser. Le module d'analyse comprend en outre un dispositif d'injection configuré pour prélever une fraction du faisceau laser dénommée faisceau oscillateur local et pour mélanger ledit faisceau oscillateur local avec le faisceau d'intérêt, et l'au moins un dispositif de caractérisation comprend un photo-détecteur configuré pour générer un signal de battement entre ledit faisceau oscillateur local et le faisceau d'intérêt.

Selon un mode de réalisation du système de type lidar selon l'invention, le module d'analyse comprend en outre un modulateur acousto-optique configuré pour décaler en fréquence le faisceau oscillateur local et/ou une optique d'adaptation configurée pour adapter un front d'onde du faisceau oscillateur local au front d'onde du faisceau d'intérêt.

Préférentiellement le photo-détecteur est un détecteur balancé.

Selon un mode de réalisation l'optique d'illumination comprend une première fibre optique et le dispositif d'injection comprend un coupleur 1×2, une deuxième fibre optique et un coupleur 2×2 pour mélanger le faisceau oscillateur local et le faisceau d'intérêt et injecter ceux-ci dans le détecteur balancé.

Selon un autre aspect, l'invention concerne une méthode de caractérisation optique d'une zone d'intérêt d'un objet d'une scène comprenant :
- une étape de sélection comprenant les sous-étapes consistant à :
   - imager la scène sur un détecteur matriciel avec une optique d'imagerie,
   - imager simultanément ladite scène sur une matrice de micro-miroirs (DMD),
   - sélectionner la zone d'intérêt de l'objet dans une image de la scène générée par le détecteur matriciel,
   - activer sélectivement les micro-miroirs de la matrice compris dans la zone d'intérêt,
- une étape d'analyse comprenant les sous-étapes consistant à :
   - collecter un faisceau d'intérêt (Br) réfléchi par les micro-miroirs activés,
   - caractériser ladite zone d'intérêt (ZI) à partir du faisceau d'intérêt (Br).

Selon un mode de réalisation, l'étape de sélection comprend en outre une sous-étape d'affichage de l'image de la scène et de la zone d'intérêt sélectionnée.

Selon un mode de réalisation l'étape de sélection est réalisée par un utilisateur ou par une unité de traitement et de contrôle.

Selon un mode de réalisation, les étapes de sélection et d'analyse sont réitérées pour différentes zones d'intérêt de manière à balayer au moins une partie de l'objet.

Selon un mode de réalisation les étapes de sélection et d'analyse sont réitérées dans le temps pour une même zone d'intérêt.

Selon une variante, la méthode de caractérisation optique selon l'invention comprend en outre une étape d'illumination incohérente par l'arrière de l'objet, ledit objet étant au moins partiellement transparent à ladite illumination.

Selon une autre variante, la méthode de caractérisation optique selon l'invention comprend en outre une étape d'illumination cohérente de l'objet, une étape de prélèvement d'une fraction d'un faisceau laser d'illumination dénommé faisceau oscillateur local, et une étape de mélange dudit faisceau oscillateur local avec ledit faisceau d'intérêt, l'étape de caractérisation de ladite zone d'intérêt comprenant la génération d'un signal de battement entre ledit faisceau oscillateur local et le faisceau d'intérêt (Br).

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés. Par souci de clarté les mêmes éléments porteront les mêmes repères dans les différentes figures.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :
La figure 1 décrit un système de caractérisation optique d'une zone d'intérêt ZI d'un objet OBJ (ou d'un paysage) d'une scène selon l'invention.
La figure 2 illustre l'image de la scène projetée sur la matrice de micro-miroirs.
La figure 3 illustre un exemple de micro-miroirs activités et non activés.
La figure 4 illustre un exemple de réalisation de système selon l'invention avec un spectromètre comme dispositif de caractérisation.
La figure 5 illustre la sélection de trois zones d'intérêt ZI1, ZI2, ZI3 et l'obtention des spectres T1(λ), T2(λ), T3(λ) correspondant à chaque zone par simple sélection dans l'image de la scène.
La figure 6 illustre un mode de réalisation du module d'analyse du système de caractérisation optique selon l'invention comprenant une pluralité de dispositifs de caractérisation.
La figure 7 illustre le principe bien connu du Lidar.
La figure 8 illustre une variante du système de caractérisation optique selon l'invention de type LIDAR.
La figure 9 illustre un mode de réalisation de l'invention dans lequel le module d'analyse comprend un modulateur acousto-optique et/ou une optique d'adaptation.

### DESCRIPTION DETAILLEE DE L'INVENTION

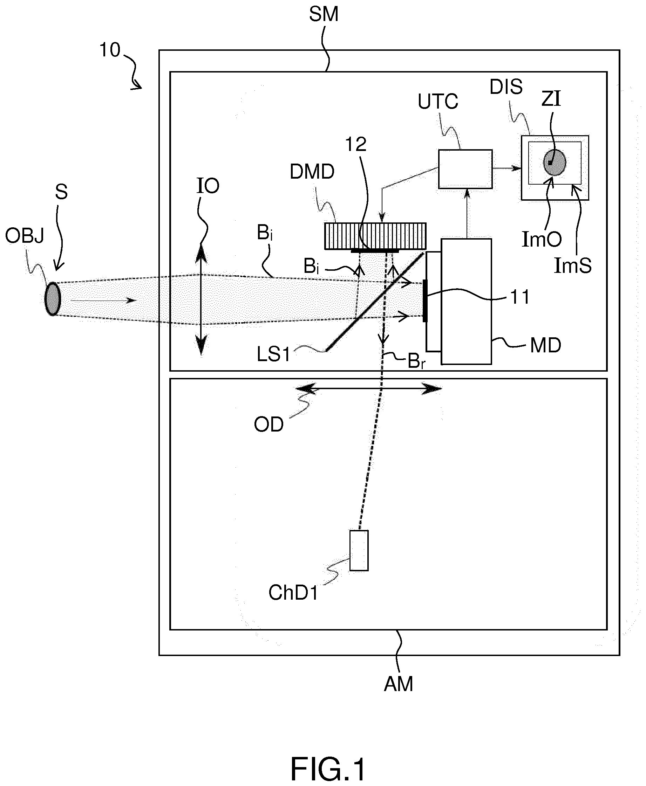

Le système de caractérisation optique 10 d'une zone d'intérêt ZI d'un objet OBJ (ou d'un paysage) d'une scène S est décrit figure 1. Il comprend un module de sélection SM pour sélectionner la zone d'intérêt ZI et un module d'analyse AM pour analyser cette zone.

Le module de sélection SM comprend un détecteur matriciel MD et une optique d'imagerie IO réalisant une image 11 (optique) de la scène S sur le détecteur matriciel MD. On dénomme faisceau initial Bi via un faisceau initial le faisceau issu de l'objet, qui est collecté par l'optique d'imagerie puis qui arrivant sur le détecteur MD en formant l'image 11 de la scène S.

Le détecteur MD transforme l'image optique 11 de la scène en une image électronique ImS. Le détecteur matriciel MD est typiquement un détecteur de type CMOS ou CCD.

Le module SM comprend également une matrice de micro-miroirs DMD et une première lame séparatrice LS1 disposée sur un trajet optique du faisceau initial Bi. La matrice de micro-miroirs DMD et la lame séparatrice LS1 sont disposées de sorte que l'optique d'imagerie IO image simultanément la scène S sur la matrice de micro-miroirs. On dénomme 12 l'image (optique) projetée sur le DMD. Ainsi l'image de la scène est projetée simultanément sur les deux éléments MD et DMD.

Dans l'exemple de la figure 1 le détecteur MD et la matrice de miroirs DMD sont disposé à 90 ° par rapport à la lame LS1 et à égale distance.

Une matrice de micro-miroirs DMD (pour « Digital Micro Mirror » en anglais) est connue de l'homme de l'art.

Il s'agit d'un microsystème électromécanique développé par exemple par Texas Instruments pour la projection d'une image numérique (projecteur DLP pour « Digital Light Processing »). Au coeur d'un projecteur numérique DLP on trouve le système DMD (Digital Micromirror Device) breveté par Texas Instruments. La surface contenant les micros miroirs est éclairée par une source de lumière. Chaque micro-miroir de la matrice bascule sur 2 positions différentes : on ou off: il peut s'incliner de 10 à 15° suivant le même axe de façon à réfléchir la lumière incidente soit vers une lentille de manière à ce qu'elle soit collectée par cette dernière, soit en dehors de l'ouverture de la lentille, par exemple vers une surface absorbante dans l'application projection. Le régime est donc binaire.

Les micro-miroirs pivotent sous l'effet d'un champ électrostatique agissant sur le substrat sur lequel ils sont déposés, comprenant les circuits de commande CMOS.

L'architecture du système selon l'invention utilise de manière originale une matrice DMD comme expliqué plus loin.

Le module de sélection SM comprend enfin une unité de traitement et de contrôle UTC reliée au détecteur matriciel MD et à la matrice de micro-miroirs DMD. L'UTC est configurée pour traiter l'image ImS générée par le détecteur MD, le traitement consistant à minima en un codage électronique de l'image optique recueillie par le détecteur MD. L'UTC est également configurée pour définir et sélectionner une zone d'intérêt ZI de l'objet OBJ dans l'image ImS.

La zone d'intérêt ZI peut être sélectionnée dans l'image ImS par un utilisateur ou automatiquement par l'UTC.

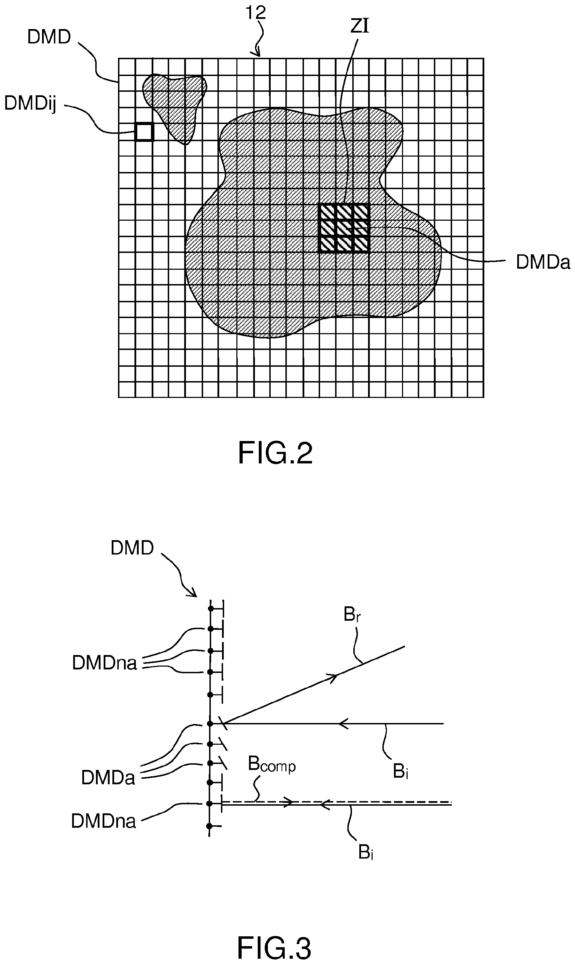

La figure 2 illustre l'image 12 de la scène projetée sur le DMD. L'UTC est capable de repérer la position de la zone ZI sélectionnée via ImS dans l'image 12 et ainsi de déterminer les micro-miroirs de DMD localisés à l'endroit correspondant à cette zone ZI sélectionnée. L'UTC est également configurée pour activer sélectivement ces micro-miroirs compris dans la zone d'intérêt, dénommés DMDa. Ces micro-miroirs sont ainsi éclairés par la fraction du faisceau initial Bi correspondant à la zone ZI. Lorsque les contours de la zone ZI ne coïncident pas exactement avec les éléments de DMD, un algorithme de lissage peut être mis en oeuvre pour déterminer quels sont les micro-miroirs du contour à activer.

On dénomme DMDna les autres micro-miroirs de la matrice, qui ne sont pas activés par l'UTC.

Les miroirs activés réfléchissent la fraction du faisceau Bi correspondant à ZI, cette fraction réfléchie étant dénommée faisceau d'intérêt Br.

Le module d'analyse AM du système 10 selon l'invention comprend un dispositif optique de collection OD couplé à la matrice de micro-miroirs DMD et configuré pour collecter le faisceau d'intérêt Br réfléchi par les micro-miroirs activés.

On reproduit ici le fonctionnement d'une matrice DMD dans un projecteur. L'optique OD est couplée au DMD (ouverture, focale) de sorte que la lumière réfléchie par les micro-miroirs activés, c'est-à-dire le faisceau d'intérêt Br, soit collectée par OD (position « on »). Ainsi l'activation d'un micro-miroir consiste à donner au micro-miroir une inclinaison telle que la réflexion s'opère dans au moins une direction de l'espace telle que Br soit collecté par OD. La lumière réfléchie par les autres micro-miroirs (non activés), dénommée faisceau complémentaire, est réfléchie quant à elle selon au mois une direction de l'espace telle que le faisceau complémentaire n'est pas collecté par OD (position « off »).

Un exemple de micro-miroirs activités et non activés est illustré figure 3. Dans cet exemple la position « on » des micro-miroirs DMDa est par exemple un angle de +10°, tandis que la positon « off » des micro-miroirs DMDna est l'incidence normale. Ce pourrait également être selon une direction de -10°.

D'autres configurations sont bien entendu possibles. On pourrait à l'inverse régler le « on » sur une réflexion en incidence normale, et le off sur une direction de +10°, si la matrice DMD le permet bien entendu.

Enfin le module d'analyse AM comprend au moins un dispositif de caractérisation ChD1 configuré pour récupérer le faisceau d'intérêt Br et pour caractériser ladite zone d'intérêt ZI à partir du faisceau d'intérêt Br.

Pour un maximum de simplicité préférentiellement l'élément de ChD1 récupérant le flux lumineux de Br est un capteur monodimensionnel.

Pour une détection de l'intensité, le capteur monodimensionnel est un photodétecteur (photodiode, photomultiplicateur, diode à avalanche...) préférentiellement disposé dans le plan focal du dispositif optique de collection OD pour récupérer un maximum de flux.

Selon un mode de réalisation le dispositif de caractérisation du module d'analyse est un spectromètre ou un polarimètre.

L'approche proposée par le système selon l'invention offre la possibilité d'une caractérisation optique d'une région d'intérêt grâce à un module de sélection couplé à au moins un capteur simple, par exemple monodimensionnel. Le problème de l'imagerie est donc reporté sur la sélection d'une zone d'intérêt par une imagerie conventionnelle (caméra CMOS ou CCD) et sur la matrice de micro-miroirs DMD qui dirige le signal optique sur le détecteur adapté à la mesure à effectuer.

Le système modulaire complet est très compact. On caractérise des zones d'intérêt en optimisant le capteur ponctuel sans avoir à multiplier ce capteur par le nombre de pixels de l'image, c'est-à-dire sans besoin d'étaler sa complexité sur des matrices bidimensionnelles. Il peut être facilement miniaturisé, intégré et donc réalisable à bas coût.

De plus, la quantité de mémoire requise pour une mesure complète d'un objet ou d'une partie d'un objet, à partir de zone élémentaires sélectionnées, est très réduite grâce à l'élaboration analogique effectuée à priori par l'unité de sélection. Les signaux à digitaliser et élaborer sont la sortie du détecteur unidimensionnel, permettant de diminuer de manière importante le flux des données et donc donnant au système une grande capacité d'adaptation aux changements dynamiques de la zone d'intérêt à caractériser.

En fait, dans l'architecture proposée la composition en pixels de l'image est reportée sur l'unité de sélection formée par la caméra et le modulateur DMD. Dans l'invention le parallélisme offert par les composants caméra, DMD et capteur ponctuel est utilisé pour réaliser le module de caractérisation optique.

Selon un mode de réalisation, le système de caractérisation optique 10 selon l'invention comprend en outre un afficheur DIS configuré pour afficher l'image ImS de l'objet générée par MD et la zone d'intérêt sélectionnée. L'afficheur DIS, couplé à l'UTC, permet par exemple à un utilisateur de sélectionner une zone d'intérêt à caractériser en temps réel.

Selon un autre mode de réalisation l'UTC comprend un algorithme de reconnaissance de forme qui permet une sélection automatisée de la zone d'intérêt.

Selon un mode de réalisation, on réitère la sélection et l'analyse pour différentes zones d'intérêt de manière à balayer au moins une partie de l'objet. On peut ainsi analyser une partie d'un objet ou un objet complet.

Selon un autre mode de réalisation, que l'on peut combiner au mode précédent, la réitération s'effectue dans le temps pour une même zone d'intérêt, permettant une analyse dynamique, en temps réel, de la zone à caractériser.

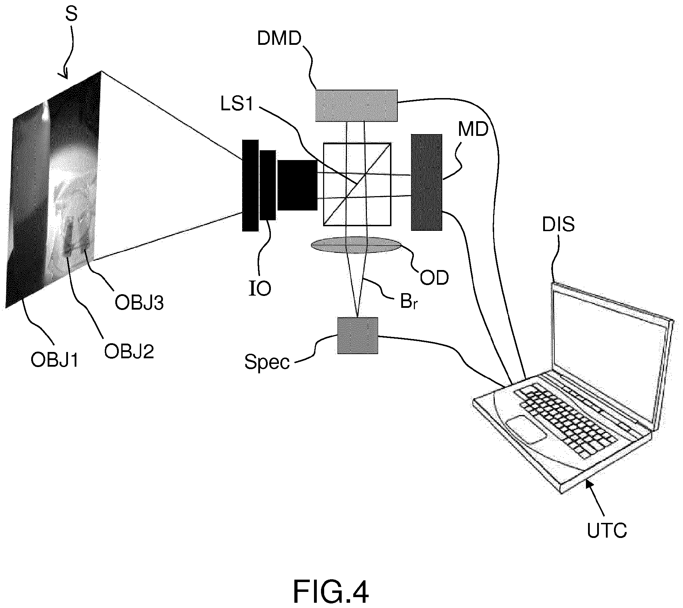

Un exemple de réalisation de système selon l'invention avec un spectromètre Spec (OceanOptics USB2000) comme un dispositif de caractérisation ChD1, est illustré dans la figure 4.

La paire imagerie IO/détecteur matriciel MD est issue d'une caméra, avec une optique de focal 20 cm et un capteur CMOS présentant 1280x1024 pixels.

La matrice DMD est une matrice de Texas Instrument présentant 1920x1080 pixels, issue d'un système DLP6500. Les positons on et off sont respectivement +12° et -12°, soit 24° de différence. Le DMD est couplé à une optique de collection OD de focale 10 cm, elle-même couplée au spectromètre Spec.

L'UTC est un ordinateur muni d'un écran DIS.

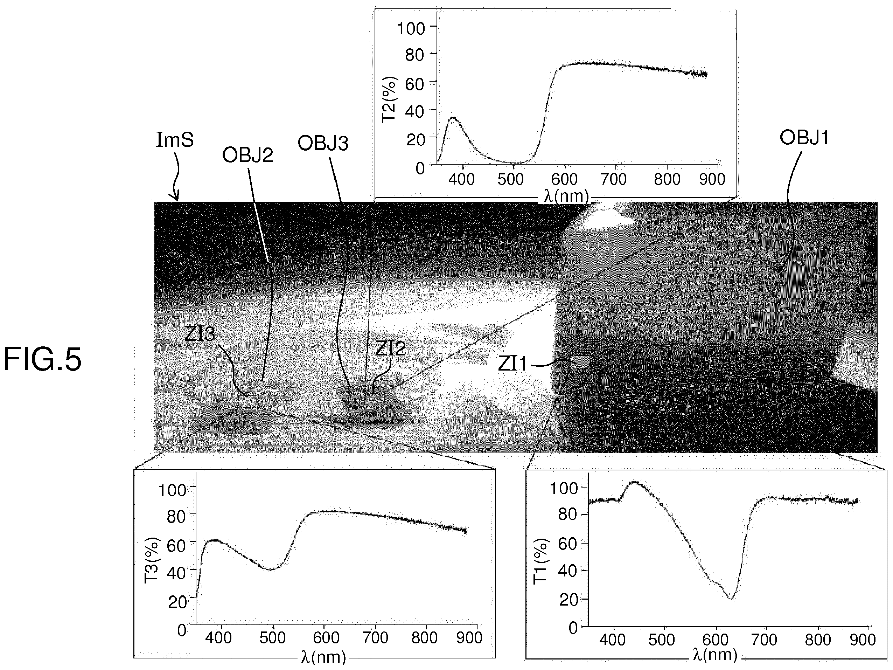

Dans l'exemple de la figure 4 la scène est composée de trois objets, deux objets OBJ2 et OBJ3, sont des échantillons colorés entre lames de verre et un troisième objet OBJ1 est un bidon translucide contenant un liquide. On sélectionne successivement trois zones d'intérêt ZI1, ZI2, ZI3, tel qu'illustré figure 5, et on obtient ainsi rapidement le spectre Ti(λ) i=1,2,3 de chaque zone par simple sélection dans l'image de la scène ImS, sans avoir à rerégler le spectromètre entre chaque mesure.

Selon un mode de réalisation l'au moins un dispositif de caractérisation est choisi parmi un photo-détecteur, un spectromètre, un polarimètre.

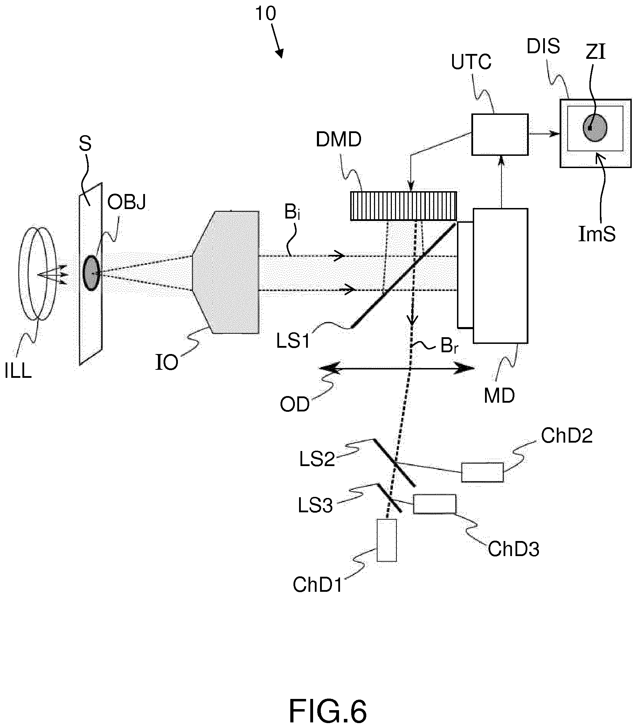

Selon un mode de réalisation illustré dans la figure 6, le module d'analyse du système de caractérisation optique selon l'invention comprend une pluralité de dispositifs de caractérisation, ici ChD1, ChD2, ChD3, chaque dispositif de caractérisation recevant une fraction du faisceau d'intérêt Br, typiquement prélevé via des lames séparatrices, ici LS2, LS3.

On tire ici partie de la structure modulaire du système selon l'invention pour réaliser de manière très simple, et avec un même module de sélection, une multi-caractérisation optique effectuée en parallèle sur les dispositifs de caractérisation. On utilise préférentiellement un capteur ponctuel pour chaque mesure optique. Un avantage de l'architecture proposée par la présente invention par rapport aux systèmes d'analyse existants aujourd'hui est ainsi la possibilité d'avoir une mesure optique multidimensionnelle d'une zone d'intérêt d'un objet ou d'un paysage à analyser.

Par exemple il est possible de réaliser simultanément une analyse d'intensité, une analyse spectrale et une analyse de polarisation avec respectivement un photo-détecteur, un spectromètre et un polarimètre agencés tel que décrit figure 6.

Ainsi au moins un dispositif de caractérisation est choisi parmi un photodétecteur, un spectromètre, un polarimètre.

On peut également positionner plusieurs détecteur du même type mais sensibles dans des bandes spectrales différentes, ou plusieurs photodétecteurs présentant différentes gammes d'amplification d'intensité...

L'objet peut être illuminé avec une source incohérente ou cohérente, dans diverses bandes spectrales telles que le visible ou l'infrarouge, les dispositifs de caractérisation étant adaptés à l'illumination.

Selon un mode de réalisation également illustré dans la figure 6, l'objet est illuminé par l'arrière par une illumination incohérente ILL, l'objet étant au moins partiellement transparent à l'illumination, et l'imagerie est réalisée par une optique d'imagerie comprenant un objectif de microscope.

Le système selon l'invention couplé à l'illumination incohérente forme alors un ensemble pouvant remplacer la caméra générique utilisée dans un microscope et offrant la possibilité de faire une imagerie microscopique et une caractérisation d'une zone d'intérêt (par exemple: spectroscopie, polarisation, etc...).

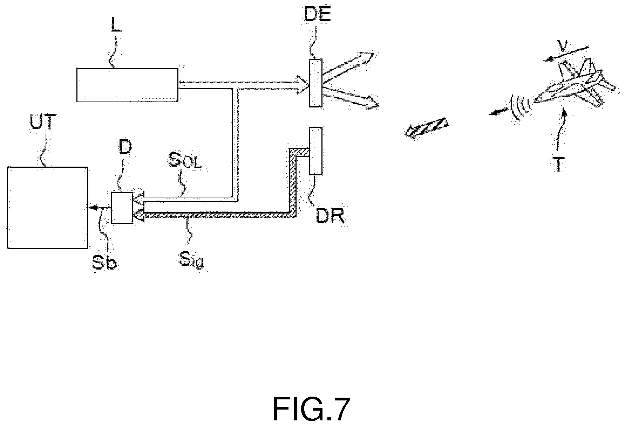

Selon une variante, le système de caractérisation optique 10 selon l'invention est de type LIDAR. Le principe d'un lidar cohérent est bien connu de l'état de la technique et illustré figure 7. Un lidar cohérent comprend une source cohérente L, typiquement un laser, qui émet une onde lumineuse cohérente (domaine IR, visible ou UV proche), un dispositif d'émission DE qui permet d'illuminer un volume de l'espace, et un dispositif de réception DR, qui collecte une fraction de l'onde lumineuse rétrodiffusée par une cible T. Le décalage de fréquence Doppler v_{Dop} de l'onde rétrodiffusée est fonction de la vitesse radiale v de la cible T :
v_{DOP} = 2v/λ λ longueur d'onde du laser

A la réception on effectue un mélange entre l'onde lumineuse rétrodiffusée reçue Sig de fréquence signal fs et une partie de l'onde émise S_{OL} dénommée onde OL pour « oscillateur local » qui présente une fréquence d'oscillateur local f_{OL}. L'interférence de ces deux ondes est détectée par un photodétecteur D, et le signal électrique en sortie du détecteur présente un terme oscillant dénommé signal de battement Sb, en plus des termes proportionnels à la puissance reçue et à la puissance d'oscillateur local. Une unité de traitement UT numérise ce signal et en extrait une information de localisation de la cible T. Cette information de localisation de la cible est préférentiellement une information de vitesse v, et/ou une information de position (avec un signal émis particulier), voire une information de présence et/ou de vibration. Préférentiellement l'unité de traitement UT filtre électroniquement le signal de battement Sb dans une bande étroite centrée sur la fréquence nulle.

On connait également de l'état de la technique l'utilisation d'une détection dite équilibrée ou « balancée » («balanced» en anglais) pour réduire le bruit d'intensité de la source cohérente. Pour cela on utilise un détecteur D équilibré ou « balancé », constitué de deux détecteurs. Les signaux S_{OL} et Sig sont répartis entre les deux détecteurs d'une manière particulière, et on effectue la différence des intensités reçues par les deux détecteurs.

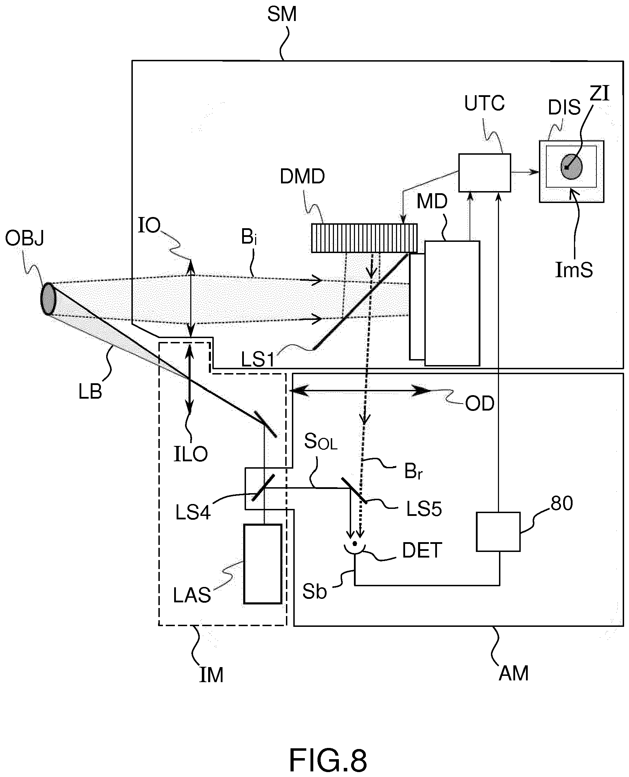

Le système caractérisation optique 10 selon l'invention de type LIDAR est illustré dans la figure 8. Il comprend en outre un module d'illumination IM comprenant une source laser LAS émettant un faisceau laser et une optique d'illumination ILO configurée pour illuminer l'objet avec le faisceau laser LB.

Pour opérer la fonctionnalité LIDAR le module d'analyse AM comprend en outre un dispositif d'injection configuré pour prélever une fraction du faisceau laser dénommée faisceau oscillateur local S_{OL} et pour mélanger ledit faisceau oscillateur local S_{OL} avec le faisceau d'intérêt Br, correspondant ici à la fraction au faisceau rétrodiffusé par la zone d'intérêt de la cible et réfléchi par les micro-miroirs activés.

Dans l'exemple non limitatif de la figure 8 le dispositif d'injection comprend une lame séparatrice LS4 pour prélever S_{OL} et une autre lame séparatrice LS5 pour superposer les deux signaux Br et S_{OL}.

Dans le système 10 de type LIDAR l'au moins un dispositif de caractérisation comprenant un photo-détecteur DET configuré pour générer un signal de battement Sb entre ledit faisceau oscillateur local S_{OL} et le faisceau d'intérêt Br. On détermine ainsi, à partir du signal de battement Sb, une information sur la phase entre les deux ondes et ainsi une information de vitesse et/ou de position de l'objet OBJ, à l'aide d'une unité de traitement 80 qui peut être indépendante (mais préférentiellement reliée à UTC comme illustré figure 8) ou totalement/partiellement comprise dans UTC.

Selon un mode de réalisation préféré la source laser est impulsionnelle et présente un « chirp » fréquentiel.

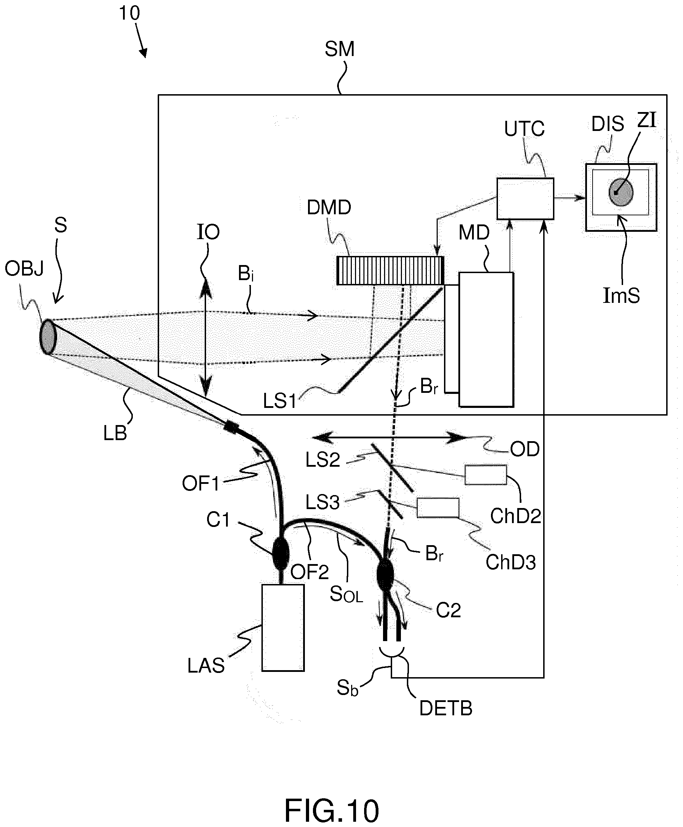

On peut bien entendu combiner cette variante avec le mode de réalisation illustré figure 6, et prélever une fraction de Br pour obtenir en parallèle d'autres informations, typiquement une information sur son spectre et/ou sa polarisation (voir figure 10).

Préférentiellement le photo-détecteur DET est un détecteur balancé DETB.

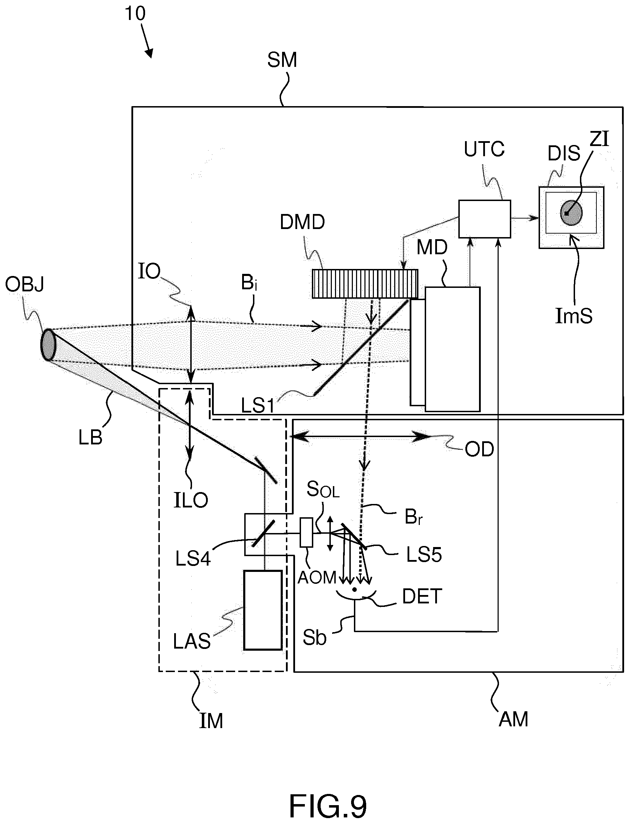

Selon un mode de réalisation illustré dans la figure 9, le module d'analyse comprend en outre un modulateur acousto-optique AOM configuré pour décaler en fréquence le faisceau oscillateur local et/ou une optique d'adaptation AdO configurée pour adapter un front d'onde du faisceau oscillateur local au front d'onde du faisceau d'intérêt.

Selon un mode de réalisation permettant une architecture plus intégrée illustré dans la figure 10, l'optique d'illumination comprend une première fibre optique OF1 et le dispositif d'injection comprend un coupleur 1x2 C1 pour prélever le faisceau oscillateur local, une deuxième fibre optique OF2 pour transporter le faisceau oscillateur local et un coupleur 2x2 C2 connecté au détecteur balancé DETB, pour mélanger le faisceau oscillateur local et le faisceau d'intérêt et injecter ceux-ci dans le détecteur balancé DETB. Préférentiellement OF1 et OF2 sont des fibres monomodes.

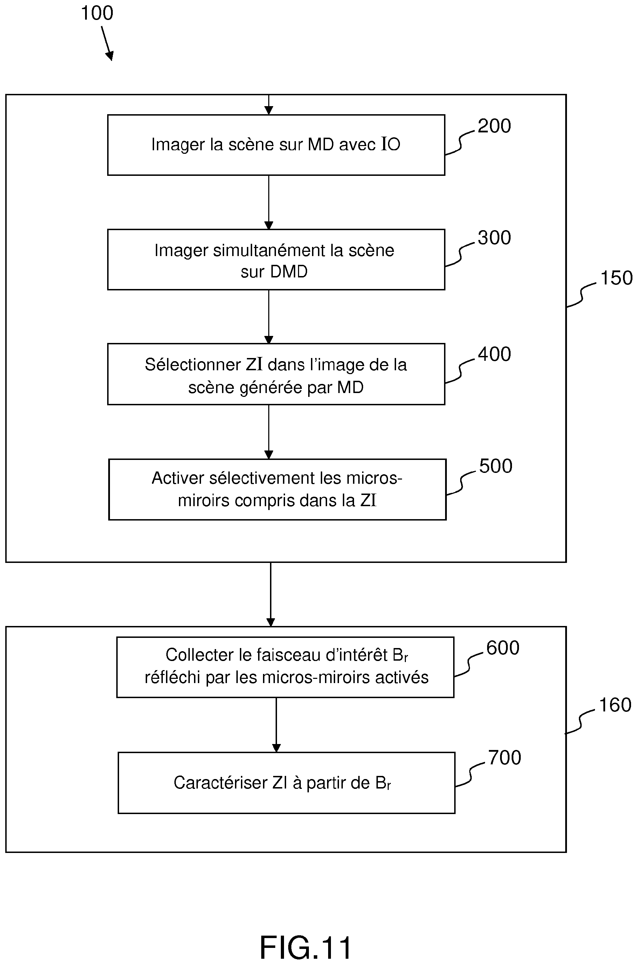

Selon un autre aspect l'invention concerne une méthode de caractérisation optique 100 d'une zone d'intérêt ZI d'un objet d'une scène illustrée dans la figure 11. La méthode comprend une première étape de sélection 150 comprenant les sous-étapes suivantes :
Un sous étape 200° image la scène sur un détecteur matriciel MD avec une optique d'imagerie IO et une sous étape 300 image simultanément ladite scène sur une matrice de micro-miroirs DMD.

Puis dans une sous étape 400 on sélectionne la zone d'intérêt ZI de l'objet dans une image de la scène ImS générée par le détecteur matriciel,

Dans une sous-étape 500 on active sélectivement les micro-miroirs de la matrice compris dans la zone d'intérêt.

La méthode 100 comprend une deuxième étape d'analyse une étape 160 comprenant une sous étape 600 de collection d'un faisceau d'intérêt Br réfléchi par les micro-miroirs activés et une sous étape 700 de caractérisation de ladite zone d'intérêt ZI à partir du faisceau d'intérêt Br.

Selon un mode de réalisation, l'étape de sélection 160 comprend en outre une sous-étape d'affichage de l'image de la scène et de la zone d'intérêt sélectionnée.

Selon une variante, l'étape de sélection est réalisée par un utilisateur. Selon une autre variante l'étape de sélection est réalisée par une unité de traitement et de contrôle.

Selon un mode de réalisation, les étapes de sélection et d'analyse sont réitérées pour différentes zones d'intérêt de manière à balayer au moins une partie de l'objet.

Selon un autre mode de réalisation, qui peut être combiné au mode précédent, les étapes de sélection et d'analyse sont réitérées dans le temps pour une même zone d'intérêt.

Selon une variante, la méthode 100 selon l'invention comprend une étape d'illumination incohérente par l'arrière de l'objet, l'objet étant au moins partiellement transparent à l'illumination.

Selon une autre variante, la méthode de caractérisation optique 100 selon l'invention réalise un LIDAR et comprend une étape d'illumination cohérente de l'objet, une étape de prélèvement d'une fraction d'un faisceau laser d'illumination dénommé faisceau oscillateur local S_{OL}, et une étape de mélange dudit faisceau oscillateur local avec ledit faisceau d'intérêt Br, l'étape de caractérisation de ladite zone d'intérêt comprenant la génération d'un signal de battement Sb entre ledit faisceau oscillateur local et ledit faisceau d'intérêt.

## Revendications

1. Système de caractérisation optique (10) d'une zone d'intérêt (ZI) d'un objet (OBJ) d'une scène (S) comprenant :
- un module de sélection (SM) comprenant :
- un détecteur matriciel (MD) et une optique d'imagerie (IO) réalisant une image de la scène sur le détecteur matriciel (MD) via un faisceau initial (Bi),
- une matrice de micro-miroirs (DMD) et une première lame séparatrice (LS1) disposée sur un trajet optique du faisceau initial, la matrice de micro-miroirs (DMD) et la lame séparatrice (LS1) étant disposées de sorte que l'optique d'imagerie (IO) image simultanément la scène sur la matrice de micro-miroirs et sur le détecteur matriciel,
- une unité de traitement et de contrôle (UTC) configurée pour traiter l'image de la scène (ImS) générée par le détecteur matriciel (MD), pour sélectionner la zone d'intérêt de l'objet dans ladite image de la scène générée par le détecteur matriciel, et pour activer sélectivement les micro-miroirs de la matrice compris dans la zone d'intérêt,
- un module d'analyse (AM) comprenant :
- un dispositif optique de collection (OD) couplé à la matrice de micro-miroirs et configuré pour collecter un faisceau d'intérêt (Br) réfléchit par les micro-miroirs activés,
- au moins un dispositif de caractérisation (ChD1) configuré pour récupérer le faisceau d'intérêt et pour caractériser ladite zone d'intérêt à partir du faisceau d'intérêt (Br).

2. Système de caractérisation optique (10) selon la revendication 1 dans lequel l'au moins un dispositif de caractérisation comprend un capteur monodimensionnel.

3. Système de caractérisation optique (10) selon l'une des revendications précédentes dans lequel le module d'analyse comprend une pluralité de dispositifs de caractérisation (ChD1, ChD2, ChD3), chaque dispositif de caractérisation recevant une fraction du faisceau d'intérêt (Br).

4. Système de caractérisation optique (10) selon l'une des revendications précédentes comprenant en outre un afficheur (DIS) configuré pour afficher l'image de la scène (ImS) générée par le détecteur matriciel et la zone d'intérêt (ZI) sélectionnée.

5. Système de caractérisation optique selon l'une des revendications précédentes dans lequel au moins un dispositif de caractérisation est choisi parmi un photo-détecteur, un spectromètre, un polarimètre.

6. Système de caractérisation optique (10) selon l'une des revendications précédentes de type LIDAR comprenant en outre un module d'illumination (IM) comprenant une source laser (LAS) émettant un faisceau laser et une optique d'illumination (ILO) configurée pour illuminer l'objet avec le faisceau laser (LB),
le module d'analyse (AM) comprenant en outre un dispositif d'injection (LS4, LS5, C1, C2) configuré pour prélever une fraction du faisceau laser dénommée faisceau oscillateur local (S_{OL}) et pour mélanger ledit faisceau oscillateur local (S_{OL}) avec le faisceau d'intérêt (Br),
l'au moins un dispositif de caractérisation comprenant un photo-détecteur (DET) configuré pour générer un signal de battement (Sb) entre ledit faisceau oscillateur local (S_{OL}) et le faisceau d'intérêt (Br).

7. Système de caractérisation optique (10) de type LIDAR selon la revendication précédente dans lequel le module d'analyse comprend en outre un modulateur acousto-optique (AOM) configuré pour décaler en fréquence le faisceau oscillateur local et/ou une optique d'adaptation (AdO) configurée pour adapter un front d'onde du faisceau oscillateur local au front d'onde du faisceau d'intérêt.

8. Système de caractérisation optique (10) de type LIDAR selon l'une des revendications 6 ou 7 dans lequel le photo-détecteur (DET) est un détecteur balancé (DETB).

9. Système de caractérisation optique (10) de type LIDAR selon la revendication précédente dans lequel l'optique d'illumination comprend une première fibre optique (OF1) et le dispositif d'injection comprend un coupleur 1x2 (C1), une deuxième fibre optique (OF2) et un coupleur 2x2 (C2) pour mélanger le faisceau oscillateur local et le faisceau d'intérêt et injecter ceux-ci dans le détecteur balancé (DETB).

10. Méthode de caractérisation optique (100) d'une zone d'intérêt (ZI) d'un objet d'une scène comprenant :
- une étape de sélection (150) comprenant les sous-étapes consistant à :
- imager (200) la scène sur un détecteur matriciel (MD) avec une optique d'imagerie (IO),
- imager (300) simultanément ladite scène sur une matrice de micro-miroirs (DMD),
- sélectionner (400) la zone d'intérêt de l'objet dans une image de la scène générée par le détecteur matriciel,
- activer (500) sélectivement les micro-miroirs de la matrice compris dans la zone d'intérêt,
- une étape d'analyse (160) comprenant les sous-étapes consistant à :
- collecter (600) un faisceau d'intérêt (Br) réfléchi par les micro-miroirs activés,
- caractériser (700) ladite zone d'intérêt (ZI) à partir du faisceau d'intérêt (Br).

11. Méthode de caractérisation optique (100) selon la revendication précédente dans laquelle l'étape de sélection comprend en outre une sous-étape d'affichage de l'image de la scène et de la zone d'intérêt sélectionnée.

12. Méthode de caractérisation optique (100) selon l'une des revendications 10 ou 11 dans laquelle l'étape de sélection est réalisée par un utilisateur ou par une unité de traitement et de contrôle.

13. Méthode de caractérisation optique (100) selon l'une des revendications 10 à 12 dans laquelle les étapes de sélection et d'analyse sont réitérées pour différentes zones d'intérêt de manière à balayer au moins une partie de l'objet.

14. Méthode de caractérisation optique (100) selon l'une des revendications 10 à 13 dans laquelle les étapes de sélection et d'analyse sont réitérées dans le temps pour une même zone d'intérêt.

15. Méthode de caractérisation optique (100) selon l'une des revendications 10 à 14 comprenant en outre une étape d'illumination incohérente par l'arrière de l'objet, ledit objet étant au moins partiellement transparent à ladite illumination.

16. Méthode de caractérisation optique (100) selon l'une des revendications 10 à 14 comprenant en outre une étape d'illumination cohérente de l'objet, une étape de prélèvement d'une fraction d'un faisceau laser d'illumination dénommé faisceau oscillateur local (S_{OL}), et une étape de mélange dudit faisceau oscillateur local avec ledit faisceau d'intérêt, l'étape de caractérisation de ladite zone d'intérêt comprenant la génération d'un signal de battement (Sb) entre ledit faisceau oscillateur local (S_{OL}) et le faisceau d'intérêt (Br).

## Patentansprüche

1. System (10) zur optischen Charakterisierung einer Zone von Interesse (ZI) eines Objekts (OBJ) einer Szene (S), das Folgendes umfasst:
- ein Auswahlmodul (SM), das Folgendes umfasst:
- einen Matrixdetektor (MD) und eine Abbildungsoptik (IO), die ein Bild der Szene auf dem Matrixdetektor (MD) über einen Anfangsstrahl (Bi) abbildet,
- eine Matrix von Mikrospiegeln (DMD) und eine erste Trennplatte (LS1), die in einem optischen Pfad des Anfangsstrahls angeordnet sind, wobei die Mikrospiegelmatrix (DMD) und die Trennplatte (LS1) so angeordnet sind, dass die Abbildungsoptik (IO) die Szene gleichzeitig auf der Mikrospiegelmatrix und auf dem Matrixdetektor abbildet,
- eine Verarbeitungs- und Steuereinheit (UTC), konfiguriert zum Verarbeiten des vom Matrixdetektor (MD) erzeugten Bildes der Szene (ImS), zum Auswählen der Zone von Interesse des Objekts in dem vom Matrixdetektor erzeugten Bild der Szene und zum selektiven Aktivieren der Mikrospiegel der in der Zone von Interesse umfassten Matrix,
- ein Analysemodul (AM), das Folgendes umfasst:
- eine optische Sammelvorrichtung (OD), die mit der Mikrospiegelmatrix gekoppelt und zum Sammeln eines von den aktivierten Mikrospiegeln reflektierten Strahls von Interesse (Br) konfiguriert ist,
- mindestens eine Charakterisierungsvorrichtung (ChD1), konfiguriert zum Einfangen des Strahls von Interesse und zum Charakterisieren der Zone von Interesse auf der Basis des Strahls von Interesse (Br).

2. System (10) zur optischen Charakterisierung nach Anspruch 1, wobei die mindestens eine Charakterisierungsvorrichtung einen eindimensionalen Sensor umfasst.

3. System (10) zur optischen Charakterisierung nach einem der vorhergehenden Ansprüche, wobei das Analysemodul eine Vielzahl von Charakterisierungsvorrichtungen (ChD1, ChD2, ChD3) umfasst, wobei jede Charakterisierungsvorrichtung einen Bruchteil des Strahls von Interesse (Br) empfängt.

4. System (10) zur optischen Charakterisierung nach einem der vorhergehenden Ansprüche, das ferner ein Display (DIS) umfasst, das zum Anzeigen des Bildes der vom Matrixdetektor erzeugten Szene (ImS) und der ausgewählten Zone von Interesse (ZI) konfiguriert ist.

5. System (10) zur optischen Charakterisierung nach einem der vorhergehenden Ansprüche, wobei mindestens eine Charakterisierungsvorrichtung aus einem Photodetektor, einem Spektrometer und einem Polarimeter ausgewählt ist.

6. System (10) zur optischen Charakterisierung nach einem der vorhergehenden Ansprüche vom LIDAR-Typ, das ferner ein Beleuchtungsmodul (IM) umfasst, das eine einen Laserstrahl aussendende Laserquelle (LAS) und eine Beleuchtungsoptik (ILO) umfasst, die zum Beleuchten des Objekts mit dem Laserstrahl (LB) konfiguriert ist,
wobei das Analysemodul (AM) ferner eine Injektionsvorrichtung (LS4, LS5, C1, C2) umfasst, die zum Aufnehmen eines Bruchteils des als Lokaloszillatorstrahl (S_{OL}) bezeichneten Laserstrahls und zum Mischen des Lokaloszillatorstrahls (S_{OL}) mit dem Strahl von Interesse (Br) konfiguriert ist,
wobei die mindestens eine Charakterisierungsvorrichtung einen Fotodetektor (DET) umfasst, der zum Erzeugen eines Schwebungssignals (Sb) zwischen dem Lokaloszillatorstrahl (S_{OL}) und dem Strahl von Interesse (Br) konfiguriert ist.

7. System (10) zur optischen Charakterisierung vom LIDAR-Typ nach dem vorhergehenden Anspruch, wobei das Analysemodul ferner einen akusto-optischen Modulator (AOM), der zum frequenzmäßigen Verschieben des Lokaloszillatorstrahls konfiguriert ist, und/oder eine Anpassungsoptik (AdO) umfasst, die zum Anpassen einer Wellenfront des Lokaloszillatorstrahls an die Wellenfront des Strahls von Interesse konfiguriert ist.

8. System (10) zur optischen Charakterisierung vom LIDAR-Typ nach Anspruch 6 oder 7, wobei der Fotodetektor (DET) ein Balanced-Detektor (DETB) ist.

9. System (10) zur optischen Charakterisierung vom LIDAR-Typ nach dem vorhergehenden Anspruch, wobei die Beleuchtungsoptik eine erste optische Faser (OF1) umfasst und die Injektionsvorrichtung einen 1x2-Koppler (C1), eine zweite optische Faser (OF2) und einen 2x2-Koppler (C2) umfasst, um den Lokaloszillatorstrahl und den Strahl von Interesse zu mischen und sie in den Balanced-Detektor (DETB) zu injizieren.

10. Verfahren (100) zum optischen Charakterisieren einer Zone von Interesse (ZI) eines Objekts einer Szene, das Folgendes umfasst:
- einen Auswahlschritt (150), der die folgenden Unterschritte umfasst:
- Abbilden (200) der Szene auf einem Matrixdetektor (MD) mit einer Abbildungsoptik (IO),
- gleichzeitiges Abbilden (300) der Szene auf einer Matrix von Mikrospiegeln (DMD),
- Auswählen (400) der Zone von Interesse des Objekts in einem vom Matrixdetektor erzeugten Bild der Szene,
- selektives Aktivieren (500) der in der Zone von Interesse umfassten Mikrospiegel der Matrix,
- einen Analyseschritt (160), der die folgenden Unterschritte umfasst:
- Sammeln (600) eines Strahls von Interesse (Br), der von den aktivierten Mikrospiegeln reflektiert wird,
- Charakterisieren (700) der Zone von Interesse (ZI) auf der Basis des Strahls von Interesse (Br).

11. Verfahren (100) zum optischen Charakterisieren nach dem vorhergehenden Anspruch, wobei der Auswahlschritt ferner einen Unterschritt des Anzeigens des Bildes der Szene und der ausgewählten Zone von Interesse umfasst.

12. Verfahren (100) zum optischen Charakterisieren nach Anspruch 10 oder 11, wobei der Auswahlschritt von einem Benutzer oder von einer Verarbeitungs- und Steuereinheit durchgeführt wird.

13. Verfahren (100) zum optischen Charakterisieren nach einem der Ansprüche 10 bis 12, wobei die Auswahl- und Analyseschritte für verschiedene Zonen von Interesse wiederholt werden, um mindestens einen Teil des Objekts abzutasten.

14. Verfahren (100) zum optischen Charakterisieren nach einem der Ansprüche 10 bis 13, wobei die Auswahl- und Analyseschritte für dieselbe Zone von Interesse im Zeitablauf wiederholt werden.

15. Verfahren (100) zum optischen Charakterisieren nach einem der Ansprüche 10 bis 14, die ferner einen Schritt des inkohärenten Beleuchtens des Objekts von hinten umfasst, wobei das Objekt für die Beleuchtung mindestens teilweise transparent ist.

16. Verfahren (100) zum optischen Charakterisieren nach einem der Ansprüche 10 bis 14, das ferner einen Schritt des kolateralen Beleuchtens des Objekts, einen Schritt des Aufnehmenes eines Bruchteils eines als Lokaloszillatorstrahl (S_{OL}) bezeichneten Beleuchtungslaserstrahls und einen Schritt des Mischens des Lokaloszillatorstrahls mit dem Strahl von Interesse umfasst, wobei der Schritt des Charakterisierens der Zone von Interesse das Erzeugen eines Schwebungssignals (Sb) zwischen dem Lokaloszillatorstrahl (S_{OL}) und dem Strahl von Interesse (Br) umfasst.

## Claims

1. An optical characterisation system (10) for a zone of interest (ZI) of an object (OBJ) of a scene (S), comprising:
- a selection module (SM) comprising:
- a matrix detector (MD) and an imaging optics (IO) which produces an image of the scene on the matrix detector (MD) via an initial beam (Bi),
- a micro-mirror matrix (DMD) and a first separating plate (LS1) which is arranged on an optical path of the initial beam, the micro-mirror matrix (DMD) and the separating plate (LS1) being arranged so that the imaging optics (IO) simultaneously images the scene on the micro-mirror matrix and the matrix detector,
- a processing and control unit (UTC) which is configured to process the image of the scene (ImS) generated by the matrix detector (MD) to select the zone of interest of the object in the image of the scene generated by the matrix detector and to selectively activate the micro-mirrors of the matrix comprised in the zone of interest,
- an analysis module (AM) comprising:
- an optical collection device (OD) which is coupled to the micro-mirror matrix and which is configured to collect a beam of interest (Br) reflected by the activated micro-mirrors,
- at least one characterisation device (ChD1) which is configured to recover the beam of interest and to characterise the zone of interest based on the beam of interest (Br).

2. The optical characterisation system (10) according to claim 1, wherein the at least one characterisation device comprises a monodimensional sensor.

3. The optical characterisation system (10) according to any one of the preceding claims, wherein the analysis module comprises a plurality of characterisation devices (ChD1, ChD2, ChD3), each characterisation device receiving a fraction of the beam of interest (Br).

4. The optical characterisation system (10) according to any one of the preceding claims, further comprising a display (DIS) which is configured to display the image of the scene (ImS) generated by the matrix detector and the selected zone of interest (ZI).

5. The optical characterisation system (10) according to any one of the preceding claims, wherein at least one characterisation device is selected from a photo-detector, a spectrometer, a polarimeter.

6. The optical characterisation system (10) according to any one of the preceding claims of the LIDAR type further comprising an illumination module (IM) which comprises a laser source (LAS) which transmits a laser beam and an illumination optical unit (ILO) which is configured to illuminate the object with the laser beam (LB),
the analysis module (AM) further comprising an injection device (LS4, LS5, C1, C2) which is configured to remove a fraction of the laser beam referred to as the local oscillator beam (S_{OL}) and to mix the local oscillator beam (S_{OL}) with the beam of interest (Br),
the at least one characterisation device comprising a photo-detector (DET) which is configured to generate a beat signal (Sb) between the local oscillator beam (S_{OL}) and the beam of interest (Br).

7. The optical characterisation system (10) of the LIDAR type according to the preceding claim, wherein the analysis module further comprises an acoustic-optical modulator (AOM) which is configured to offset a frequency of the local oscillator beam and/or an adaptation optics (AdO) which is configured to adapt a wave front of the local oscillator beam to the wave front of the beam of interest.

8. The optical characterisation system (10) of the LIDAR type according to one of claim 6 or 7, wherein the photo-detector (DET) is a balanced detector (DETB).

9. The optical characterisation system (10) of the LIDAR type according to the preceding claim, wherein the illumination optics comprises a first optical fibre (OF1) and the injection device comprises a 1×2 coupler (C1), a second optical fibre (OF2) and a 2x2 coupler (C2) to mix the local oscillator beam and the beam of interest and to inject them into the balanced detector (DETB).

10. A method for optical characterisation (100) of a zone of interest (ZI) of an object of a scene, comprising:
- a selection step (150) which comprises the sub-steps of:
- imaging (200) the scene on a matrix detector (MD) with an imaging optics (IO),
- simultaneously imaging (300) the scene on a micro-mirror matrix (DMD),
- selecting (400) the zone of interest of the object in an image of the scene generated by the matrix detector,
- selectively activating (500) the micro-mirrors of the matrix comprised in the zone of interest,
- an analysis step (160) comprising the sub-steps of:
- collecting (600) a beam of interest (Br) which is reflected by the activated micro-mirrors,
- characterising (700) the zone of interest (ZI) based on the beam of interest (Br).

11. The method for optical characterisation (100) according to the preceding claim, wherein the selection step further comprises a sub-step for displaying the image of the scene and the selected zone of interest.

12. The method for optical characterisation (100) according to one of claim 10 or 11, wherein the selection step is carried out by a user or by a processing and control unit.

13. The method for optical characterisation (100) according to any one of claims 10 to 12, wherein the selection and analysis steps are repeated for different zones of interest to scan at least a portion of the object.

14. The method for optical characterisation (100) according to any one of claims 10 to 13, wherein the selection and analysis steps are repeated over time for the same zone of interest.

15. The method for optical characterisation (100) according to any one of claims 10 to 14, further comprising a step of incoherent illumination of the object from the rear, the object being at least partially transparent to the illumination.

16. The method for optical characterisation (100) according to any one of claims 10 to 14, further comprising a step of coherent illumination of the object, a step of removing a fraction of an illumination laser beam, referred to as the local oscillator beam (S_{OL}), and a step of mixing the local oscillator beam with the beam of interest, the step of characterisation of the zone of interest comprising the generation of a beat signal (Sb) between the local oscillator beam (S_{OL}) and the beam of interest (Br).
